(19) Europäisches Patentamt

European Patent Office

Office européen des brevets

(11) **EP 2 393 291 B1**

(12) **EUROPEAN PATENT SPECIFICATION**

(45) Date of publication and mention
of the grant of the patent:
**19.12.2012 Bulletin 2012/51**

(51) Int Cl.:
*H04N 7/10* *(2006.01)*     *H04H 20/78* *(2008.01)*

(21) Application number: **10382166.6**

(22) Date of filing: **07.06.2010**

(54) **Programmable amplifier for television channels**

Programmierbare Verstärker für Fernsehkanäle

Amplificateur programmable pour les chaînes de télévision

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**07.12.2011 Bulletin 2011/49**

(73) Proprietor: **Angel Iglesias S.A.
20009 San Sebastian (ES)**

(72) Inventors:
• **Campo, Miguel, Angel
20009, SAN SEBASTIAN (ES)**
• **Cabezon, Xabier
20009, SAN SEBASTIAN (ES)**
• **San José, Jesús, Mari
20009, SAN SEBASTIAN (ES)**
• **Trueba, Roberto
48170, ZAMUDIO (Bizkaia) (ES)**

(74) Representative: **Carpintero Lopez, Francisco et al
Herrero & Asociados, S.L.
Alcalá 35
28014 Madrid (ES)**

(56) References cited:
**EP-A1- 1 653 609     US-A- 5 666 365
US-A- 6 014 547     US-A1- 2005 239 428
US-B1- 6 880 170**

**Description**

Technical Field of the Invention

The present invention relates to the reception of signals of the radio frequency spectrum of community television antennas, the identification of useful television channels and the subsequent equalization of the output levels.

Background of the Invention

In the prior state of the art there are community television headends, formed by programmable amplifiers, with capacities to only filter the channels and equalize the output levels. Previously, they need the intervention of an installer to analyze the spectrum, with the aid of some measuring apparatus (for example, a field measuring device), and to manually adjust the filters of the programmable amplifiers after having conducted a study of the radio frequency spectrum and deciding which channels are useful. Examples of circuits of this type can be found in patents ES2259888 and EP1794883 or even another option in which the output levels are equalized automatically, as is the case of patent ES2117953.

Description of the Invention

The object of the present invention is to facilitate an automatic operation which identifies the useful television signals of the radio frequency spectrum and auto-configures a plurality of programmable filters.
The system consists of a programmable amplifier for television channels, for a community TV headend or CATV cable network, comprising:

- An antenna input
- a plurality of programmable filters for filtering the television channels received by an antenna connected to the programmable filters.
- a common circuit for the plurality of programmable filters for sampling the television channels
- a microcontroller configured to control:

   - the sampling of television channels carried out by the common circuit, the identification of useful television channels, by the comparison with values previously established in a non-volatile memory, and, based on the television channels found in the sampling,
   - the distribution of the television channels among the programmable filters by means of the generation of control signals for adjusting the programmable filters, and
   - the equalization of the television channels, generating control signals for adjusting the output levels of the programmable filters. These output levels are controlled through a gain voltage which is individual for each programmable filter

The amplifier with programmable filters according to the invention does not require any knowledge of the radioelectric spectrum or the use of measuring equipment. For example, by pressing a button for selecting the "Auto-installation" option the equipment takes care of identifying the useful television signals in the air, assigning the different filters thereto and equalizing them. The result is that at the output of the equipment the television channels will come out filtered and equalized, allowing them to be viewed correctly in the televisions of the homes of that building. This, in turn, means a considerable time saving for the installer.
There can be a digital-to-analog converter for converting the control signals of the microcontroller into voltage gains for controlling the programmable filters.
The configuration of the microcontroller allows measuring the output power levels of the television channels in two different frequencies within each channel. The microcontroller classifies them as "analog" or "digital" upon comparing said measurements. An option consists of one of the frequencies being the analog video carrier frequency and another one being the center of the channel.
An embodiment option of the invention comprises a plurality of antennas connected to the programmable filters by means of a switching circuit. When the amplifier receives one and the same channel from different antennas, an antenna selecting criterion is necessary, therefore a channel combination algorithm is applied.
Initially, the antenna which receives the most powerful channel being the priority antenna appears as a suitable criterion. However, this criterion is not suitable when the number of filters to be assigned to each antenna is limited and are different and even entailing, when this causes adjacent channels to come from different antennas, a more than likely mismatch of impedances, a perverse effect when the signal passes through the edges of the filter, etc.

Occasionally, the system detects that there is a power level greater than the reference level in a non-existent channel. Two different reasons have been found as a response to this event. On one hand, there are channels adjacent to very powerful signals, part of which is spilled to the adjacent channels. On the other hand, an intermodulation product can cause this false signal. In this situation, the channel is attenuated or amplified with respect to the reference value, and it is checked that the new measurements do not exceed a certain threshold. In the event of exceeding these limits, the channel in question is considered as a phantom channel and is discarded.

The amplifier of the invention offers the capacity of reaction and adaptation to the environment, such that with any variation of the spectral composition due to the appearance, relocation or disappearance of channels, the system is configured by itself to this new situation.

Description of the Drawings

To complement the description which is being made and for the purpose of aiding to better understand the features of the invention according to a preferred practical embodiment thereof, a set of drawings is attached as an integral part of this description, in which the following has been depicted with an illustrative and non-limiting character:

Figure 1 is a block diagram of the circuit object of the invention.
Figure 2 is a flowchart comprising the steps performed in the circuit.

Detailed Description of the Invention

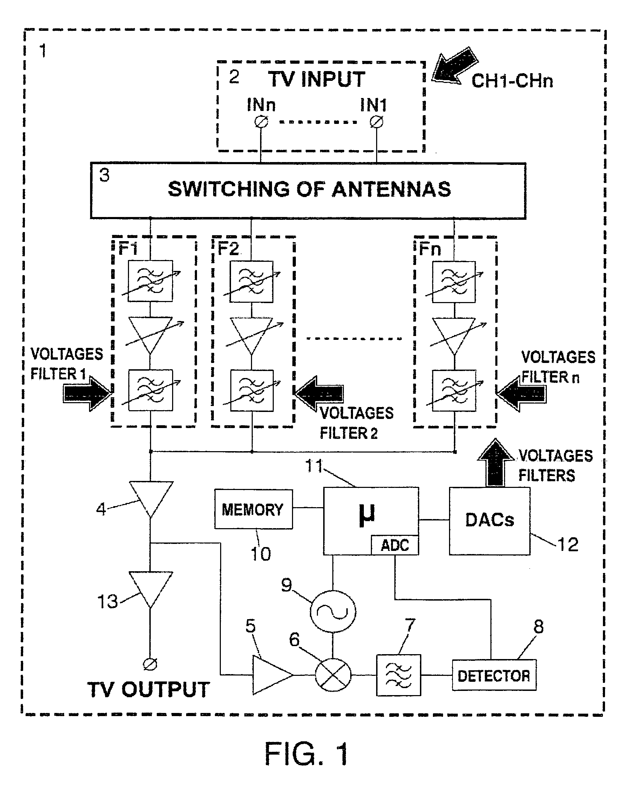

In its preferred embodiment, the present invention comprises the components of the circuit (1) depicted in Figure 1, which are the plurality of antenna inputs (2), up to three antennas in this case, the switching circuit (3) connecting them with the plurality of programmable filters (F1-Fn), the common circuit for the programmable filters (F1-Fn) for the sampling of the channels which in turn comprises three amplification stages (4),(5) and (13), a mixer (6), a filter (7), an output level detector (8) and an oscillator (9), a non-volatile memory (10) in which to store gain voltages, a microcontroller (11), a plurality of digital-to-analog converters (12) and, furthermore, a button for starting the entire auto-installation process.

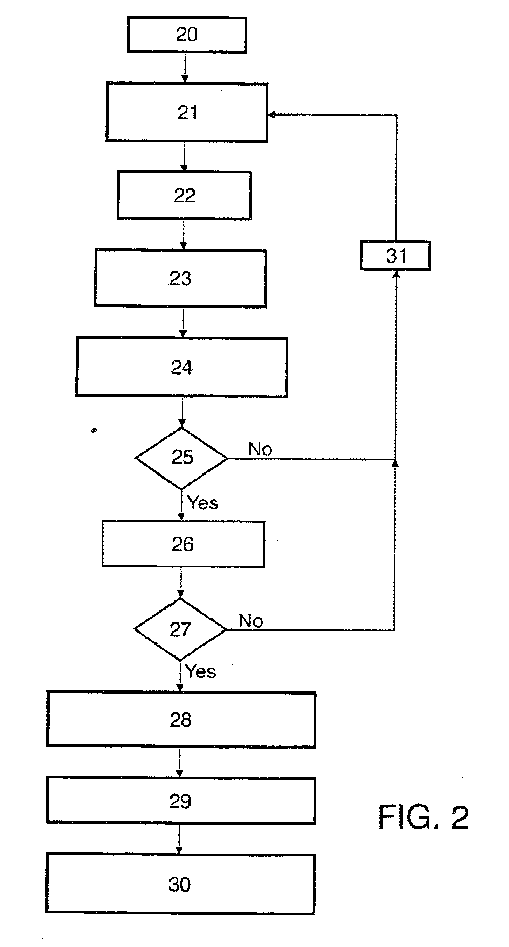

The steps depicted in Figure 2 can be grouped intro several points comprising:

- Study of the spectrum in the air: the first stage comprises measuring signals of the radio frequency spectrum to see which television channels are in the air. Given that several antennas can be connected to the system, the microcontroller determines which input is receiving a signal and connects it by means of the switching circuit (3) to a programmable filter (F2), which is adjusted channel by channel according to the voltage gain values sent by the digital-to-analog converters (12). After the filtering, the signal will be amplified (4) and (5), then mixed in the mixer (6) with a signal sent by the oscillator (9), the resultant will be filtered (7), converted into a voltage value (8) and finally digitized to be stored in a non-volatile memory (10). For each channel a sampling of the TV signal is performed in two different frequencies, one of them in the analog video carrier frequency and another one in the center of the channel. Thus, by comparing the measurements taken within the channel, it can be distinguished if the received channel is digital or analog.
- Data processing: once the sampling of all the inputs (IN1-INn) in all the channels (CH1 ... CHn) is performed, the microcontroller (11), with the data obtained and with values previously established and stored in the non-volatile memory (10), decides which channels picked up by the antennas are useful, what levels they have and if they are analog or digital. Then, based on rules implemented in the microcontroller (11), the digital-to-analog converters (12) send the voltage gains to the programmable filters (F1-Fn) so that the channels (CH1-CHn) received by the antennas are distributed among these programmable filters (F1-Fn), being able to be filtered and amplified.
- Equalization of the channels: once all the channels are distributed among the programmable filters (F1-Fn), they are sampled again in order to adjust the output levels. These levels are controlled through a gain voltage which is individual for each programmable filter. This gain voltage is also generated by the digital-to-analog converters (12) and controlled by the microcontroller (11). The channels received by the antennas thus come out equalized at the output of the system (1).

Occasionally, the system detects that there is a power level greater than the reference level in a non-existent channel. On one hand, there are channels adjacent to very powerful signals, part of which is spilled to the adjacent channels. On the other hand, an intermodulation product can cause this false signal. In this situation, the microcontroller attenuates or amplifies the channel by 3dBs with respect to the reference value and checks that the new measurements do not exceed 40% for analog channels and 80% for digital channels. In the event of exceeding these limits, the channel in question is considered as a phantom channel and is discarded.

The system allows 3 possible antenna configurations, i.e., a single antenna connected to the input 1, two antennas connected in the inputs 1 and 3, or three antennas connected in the inputs 1, 2 and 3.

When there are 2 antennas connected, the channel combination algorithm confers absolute priority to the channels of antenna 1 over the channels of antenna 3.

The channel combination algorithm for 3 antennas confers absolute priority to the channels of antenna 2 over the rest. On the other hand, when channels coming from antennas 1 and 3 are received simultaneously, the decision is to select the most powerful channel. Both the lower and the upper channels are then scanned to assign the channels of the selected antenna as useful.

The bandwidth of the filters can in no case exceed 5 channels. If so, the weakest channel is eliminated.

In relation to the correct detection of the levels of a TV signal in L standard: in L standard, the video signal is modulated in a reverse manner with respect to the European B/G standard. TV operators in France, where this standard is used, inject a fixed blank line, which marks the level of the signal, into the frame of the signal. This line must be detected and its level must be measured to have a correct reading of the power of the channel. To do this, the analog-to-digital converter of the microcontroller (11), for a period of 20 ms, which is the duration of a complete TV image, performs samplings every 12$\mu$S. Thus, at least 4 of the measurements will be taken on the blank line, the duration of which is 52$\mu$S. Of all the measurements taken in the sampling, the one with the highest value is chosen. This type of sampling provides a reliable measurement of the power of the channel even with television signals in L standard.

Figure 2 depicts a flowchart comprising the steps performed by the circuit, which are:

20: Activating antenna
21: reading in non-volatile memory (10) the values for the filter F2. The location is a channel N
22: Sending voltages to the filter F2
23: Programming the oscillator (9) to the frequencies of the channel N
24: Reading levels in the analog-to-digital converter (11) and comparing them with the data stored in the non-volatile memory (10)
25: Is the channel useful?
26: The datum is stored in the non-volatile memory (10)
27: Is it the last channel?
28: The channels detected as useful are read from the non-volatile memory (10) and the channel combination algorithm is applied
29: The voltages stored in the non-volatile memory (10) are sent to the filters
30: Equalization: the power of the channels is measured one by one and the gain of the filters is adjusted
31: N=N+1

Where steps 20 – 24 correspond to "Study of the spectrum in the air",

Steps 25 - 29 correspond to "Data processing"

Step 30 corresponds to "Equalization of the channels"

The terms in which this specification has been written must always be taken in a broad and non-limiting sense.

In this text, the word "comprises" must not be interpreted in an exclusive manner, i.e., it does not exclude the possibility that what has been described includes other elements, steps, etc.

On the other hand, the invention is not limited to the specific embodiment described herein but rather it also includes, for example, the variants which can be made by the person having ordinary skill in the art (for example, with regard to the choice of the electronic components), within what is inferred from the claims included below.

**Claims**

1. Programmable amplifier for television channels (CH1-CHn) for a community TV headend or CATV cable network, **characterized in that** it comprises the following components:

   a plurality of programmable filters (F1-Fn) for filtering the television channels received by an antenna,
   a common circuit for the plurality of programmable filters for sampling the television channels,
   a microcontroller (11) configured to control:

- the sampling of television channels, the identification of useful television channels by means of the comparison with a reference value and, based on the television channels found in the sampling,
- the distribution of the television channels among the programmable filters by means of the generation of control signals for adjusting the programmable filters, and
- the equalization of the television channels, generating control signals for adjusting the output levels of the programmable filters.

2. Amplifier according to claim 1, **characterized in that** the microcontroller is configured to identify and discard phantom channels, which are those which, having been previously identified as useful, exceed a certain threshold after having been attenuated or amplified by a certain value with respect to the reference value.

3. Amplifier according to any of the previous claims, **characterized in that** the common circuit is configured to measure the output power level of the television channels in two different frequencies within the channel and the microcontroller is configured to classify them as "analog" or "digital" upon comparing said measurements.

4. Amplifier according to any of the previous claims, **characterized in that** it comprises a plurality of antennas connected by means of a switching circuit to the plurality of programmable filters (F1-Fn).

5. Amplifier according to any of the previous claims, **characterized in that** it comprises a digital-to-analog converter (12) for converting the control signals of the microcontroller (11) into voltages for adjusting the programmable filters (F1-Fn).

**Patentansprüche**

1. Programmierbarer Verstärker für Fernsehkanäle (CH1-CHn) für einen Gemeinschafts-TV-Anschluss oder CATV Kabelnetzwerke, **gekennzeichnet durch** die folgenden Komponenten:

   eine Mehrzahl von programmierbaren Filtern (F1-Fn) zum Filtern der von einer Antenne empfangenen Fernsehkanäle,
   eine gemeinsame Schaltung für die Mehrzahl von programmierbaren Filtern zur Durchmusterung der Fernsehkanäle,
   ein Mikrokontroller (11), ausgelegt zur Steuerung:

   - der Durchmusterung der Fernsehkanäle, der Identifizierung brauchbarer Fernsehkanäle **durch** Vergleich mit einem Referenzwert und, basierend auf den bei der Durchmusterung gefundenen Fernsehkanälen,
   - der Verteilung der Fernsehkanäle unter den programmierbaren Filtern **durch** die Generierung von Steuerungssignalen zur Einstellung der programmierbaren Filter, und
   - der Entzerrung der Fernsehkanäle, wobei Steuerungssignale zur Einstellung der Ausgangsniveaus der programmierbaren Filter generiert werden.

2. Verstärker nach Anspruch 1, **dadurch gekennzeichnet, dass** der Mikrokontroller so konfiguriert ist, dass er Phantomkanäle identifiziert und verwirft, welche diejenigen sind, die nachdem sie zuvor als brauchbar identifiziert wurden, nach der Dämpfung oder Verstärkung um einen bestimmten Wert in Bezug auf den Referenzwert einen bestimmten Schwellenwert überschreiten.

3. Verstärker nach einem der vorstehenden Ansprüche, **dadurch gekennzeichnet, dass** die gemeinsame Schaltung so ausgelegt ist, dass sie das Output-Leistungsniveau der Fernsehkanäle in zwei verschiedene Frequenzen innerhalb des Kanals misst und dass der Mikrokontroller so ausgelegt ist, dass er sie als "analog" oder "digital" bei Vergleich dieser Messungen einstuft.

4. Verstärker nach einem der vorstehenden Ansprüche, **dadurch gekennzeichnet, dass** er eine Vielzahl von Antennen einschließt, die über eine Schaltung mit der Mehrzahl der programmierbaren Filter (F1-Fn) verbunden sind.

5. Verstärker nach einem der vorstehenden Ansprüche, **dadurch gekennzeichnet, dass** er einen Digital-Analog-Konverter (12) zur Konvertierung der Steuersignale des Mikrokontrollers (11) in Spannungen zur Einstellung der programmierbaren Filter (F1-Fn) aufweist.

**Revendications**

1. Amplificateur programmable pour des chaînes de télévision (CH1-CHn) pour une tête de réseau de télévision de communauté ou un réseau de télévision câblée, **caractérisé en ce qu'**il comprend les composants suivants :

   une pluralité de filtres programmables (F1-Fn) pour filtrer les chaînes de télévision reçues par une antenne,
   un circuit commun pour la pluralité de filtres programmables pour échantillonner les chaînes de télévision,
   un microcontrôleur (11) configuré pour commander :

   - l'échantillonnage de chaînes de télévision, l'identification de chaînes de télévision utiles au moyen de la comparaison à une valeur de référence et, sur la base des chaînes de télévision trouvées dans l'échantillonnage,
   - la distribution des chaînes de télévision parmi les filtres programmables au moyen de la génération de signaux de commande pour ajuster les filtres programmables, et
   - l'égalisation des chaînes de télévision, en générant des signaux de commande pour ajuster les niveaux de sortie des filtres programmables.

2. Amplificateur selon la revendication 1, **caractérisé en ce que** le microcontrôleur est configuré pour identifier et rejeter les chaînes fantômes qui, ayant été précédemment identifiées comme étant utiles, dépassent un certain seuil après avoir été atténuées ou amplifiées d'une certaine valeur par rapport à la valeur de référence.

3. Amplificateur selon l'une quelconque des revendications précédentes, **caractérisé en ce que** le circuit commun est configuré pour mesurer le niveau de puissance de sortie des chaînes de télévision dans deux fréquences différentes à l'intérieur de la chaîne et le microcontrôleur est configuré pour les classer comme « analogique » ou « numérique » à la comparaison desdites mesures.

4. Amplificateur selon l'une quelconque des revendications précédentes, **caractérisé en ce qu'**il comprend une pluralité d'antennes reliées au moyen d'un circuit de commutation à la pluralité de filtres programmables (F1-Fn).

5. Amplificateur selon l'une quelconque des revendications précédentes, **caractérisé en ce qu'**il comprend un convertisseur numérique-analogique (12) pour convertir les signaux de commande du microcontrôleur (11) en tensions pour ajuster les filtres programmables (F1-Fn).

FIG. 1

FIG. 2